# EUROPÄISCHE PATENTANMELDUNG

(11) **EP 0 535 450 A1**
(43) Veröffentlichungstag der Anmeldung: **07.04.1993**
(21) Anmeldenummer: 92115860.6
(22) Anmeldetag: 16.09.1992
(51) Int. Cl.: H01S 3/06, H01S 3/082

(54) **Festkörperlaser zur Erzeugung optischer Strahlung, insbesondere für die optische Informationsübertragung**

(30) Priorität: 30.09.1991 DE 4132522
(71) Anmelder: SIEMENS AKTIENGESELLSCHAFT, D-80333 München (DE)
(72) Erfinder: Clausen, Roger, Dr., W-2000 Hamburg 50 (DE); Heine, Frank, W-2000 Hamburg 53 (DE); Huber, Günter, Prof. Dr., W-2087 Ellerbek (DE); Reimann, Uwe, W-2000 Hamburg 1 (DE)

(57) **Zusammenfassung**

Es wird gezeigt, wie bei einem Festkörperlaser mit einem in einem optischen Resonator (2) angeordneten Kristall (1), der bei zumindest einer ausgezeichneten Emissionslinie mit einer bestimmten Wellenlänge (λₐ**)** mit geringsten Verlusten und der höchsten Verstärkung Laserstrahlung (51) emittiert, erreicht werden kann, daß der Laser mit Emissionslinien mit einer ausgewählten gegenüber der bestimmten Wellenlänge (λₐ) verschiedenen Wellenlänge (λₑ) emittiert. Dazu wird dem Resonator (2) eine in bestimmter Weise auf die ausgewählte Wellenlänge (λₑ) abgestimmte wellenlängenselektive Filtereinrichtung (4) angeordnet und der Kristall (1) muß eine Länge (d) zwischen einer definierten Minimallänge und einer definierten Maximallänge aufweisen. Mit einem Kristall aus Er:YAG gelang es bei einem solchen Laser fünf Emissionslinien mit ausgewählten Wellenlängen (λₑ) anzuregen, die genau in das Dämpfungsminimum der heute üblichen Glasfaser-Lichtwellenleiter fallen, so daß dieser Laser hervorragend für die kohärent optische Informationsübertragung in Glasfaser-Lichtwellenleitern geeignet ist.

## Beschreibung

Die Erfindung betrifft einen Festkörperlaser zur Erzeugung optischer Strahlung nach dem Oberbegriff des Patentanspruchs 1.

Derartige Festkörperlaser sind allgemein bekannt. Die stimulierte Emission wird bei solchen Lasern immer bei ausgezeichneten Emissionslinien mit bestimmten Wellenlängen erzielt, bei denen die geringsten Verluste und die höchste Verstärkung auftreten.

Der Erfindung liegt die Aufgabe zugrunde aufzuzeigen, wie bei einem Festkörperlaser der genannten Art erreicht werden kann, daß die stimulierte Emission bei Emissionslinien mit einer ausgewählten, gegenüber der Wellenlänge der ausgezeichneten Emissionslinie verschiedenen Wellenlängen erzielt wird.

Diese Aufgabe wird durch die im kennzeichnenden Teil des Anspruchs 1 angegebenen Merkmale gelöst.

Bei Erfindung werden durch das spezielle wellenlängenselektive Filter optimale Bedingungen für die stimulierte Emission bei der Emissionslinie mit der ausgewählten Wellenlänge geschaffen, jedoch hat es sich gezeigt, daß diese Maßnahme allein nicht ausreichend ist, sondern daß die Länge des Kristalls in Bezug auf das Anregungslicht sowie in Bezug auf die zu erzeugende Emissionslinie mit der ausgewählten Wellenlänge in der im kennzeichnenden Teil des Anspruch 1 definierten Weise zu bemessen ist. Die optimale Länge des Kristalls läßt sich durch ein Minimum der in den Kristall eingekoppelten Schwelleistung des Anregungslichts bestimmen, kann aber auch empirisch bestimmt werden.

Bevorzugte und vorteilhafte Ausgestaltungen des erfindungsgemäßen Lasers gehen aus den Unteransprüchen hervor.

Durch die Erfindung konnte insbesondere das folgende Problem gelöst werden:
Festkörperlaser der genannten Art mit einem Kristall aus Er:YAG scheinen sich auf den ersten Blick für den Einsatz als kohärente Lichtquelle für die Nachrichtenübertragung in Glasfasern zu eignen. Die bestimmten Wellenlängen der mit solchen Lasern bisher durch stimulierte Emissionen erzielten ausgezeichneten Emissionslinien liegen bei 1,64 µm. Vergleicht man diese Wellenlängen mit dem Transmissionsspektrum einer Glasfaser, so fällt auf, daß es wesentlich günstiger wäre, Laser zu verwenden, die mit einer Wellenlänge von 1,55 µm oder nahe bei dieser Wellenlänge emittieren. Zwar kann diese Wellenlänge durch Er:Glas- oder Er:Glasfaser-Laser erzeugt werden, jedoch sind diese Möglichkeiten nicht optimal wegen ihrer inhomogenen Emissionslinienform.

Mit einem erfindungsgemäßen Festkörperlaser mit einem Kristall aus Er:YAG konnten vorteilhafterweise fünf Emissionslinien bei den ausgewählten Wellenlängen 1,534 µm, 1,549 µm, 1,564 µm, 1,575 µm und 1,587 µm erzielt werden, die genau im Dämpfungsminimum der heute üblichen Glasfaser-Lichtwellenleiter liegen.

Insbesondere wurde dazu ein Kristall aus Er:YAG verwendet, bei dem im optischen Resonator durch Absorption von Anregungslicht einer Wellenlänge von z B. 0,657 µm im Kristall ausgzeichnete Emissionslinien bei den bestimmten Wellenlängen 1,646 µm und 1,659 µm, aber keinen kleineren bestimmten Wellenlängen angeregt wurden.

Zur Erzielung von Emissionslinien mit ausgewählten Wellenlängen kleiner als 1,646 µm erwies sich ein solcher Kristall aus Er:YAG als geeignet, bei dem 0,1% bis 5% der vom Yttrium eingenommenen Kristallgitterolätze mit Erbium anstelle von Yttrium besetzt waren. In den optischen Resonator wurde eine wellenlängenselektive Einrichtung eingebracht, die auf eine Emissionslinie mit einer ausgewählten Wellenlänge kleiner als 1,64µm abgestimmt war. Die Länge des Kristalls wurde je nach Konzentration des Erbiums im Kristall zwischen 0,5 mm und 10 mm gewählt. Bei höheren Konzentrationen muß die Kristallänge kurz gewählt werden, um die Reabsorptionsverluste möglichst gering zu halten. Der optische Resonator war so ausgebildet, daß er 95% bis 99% der aus dem Kristall austretenden Laserstrahlungsleistung zurück in den Kristall reflektierte und 1% bis 5% dieser Leistung transmittierte. Speziell wurde ein optischer Resonator verwendet, der zwei mit ihrer konkaven Seite einander zugekehrte und den Kristall zwischen sich einschließende Hohlspiegel mit gleichem Krümmungsradius aufwies, deren Krümmungsmittelpunkte in einem Punkt zusammenfielen. Die wellenlängenselektive Einrichtung wies ein doppelbrechendes wellenlängenselektives Filter auf.

Auch mit einem Kristall aus Er:YAlO₃ lassen sich erfindungsgemäße Festkörperlaser herstellen, bei denen Emissionslinien mit ausgewählten Wellenlängen zwischen 1,5 und 1,58 µm erwartet werden können und die demnach gut für den Einsatz als kohärente Lichtquelle für Nachrichtenübertragung in Glasfasern geeignet sind.

Generell ist ein erfindungsgemäßer Festkörperlaser bei geeigneter Auswahl des Kristallmaterials der wellenlängeselektiven Einrichtung und der Kristallänge zur Erzeugung optischer Strahlung mit einer Wellenlänge kleiner als 1,64 µm zur optischen Informationsübertragung in Glasfasern geeignet.

Die Erfindung wird in der nachfolgenden Beschreibung anhand der Figuren beispielhaft näher erläutert. Es zeigen:
- Figur 1: in schematischer, nicht maßstäblicher Darstellung die wesentlichen Bestandteile eines erfindungsgemäßen Festkörperlasers,
- Figur 2: in schematischer Darstellung einen wellenlängenselektiv teildurchlässigen Spiegel und
- Figur 3: den Laser 1 in der gleichen Darstellung mit der Besonderheit, daß der optische Resonator einen Hohlspiegel aufweist.

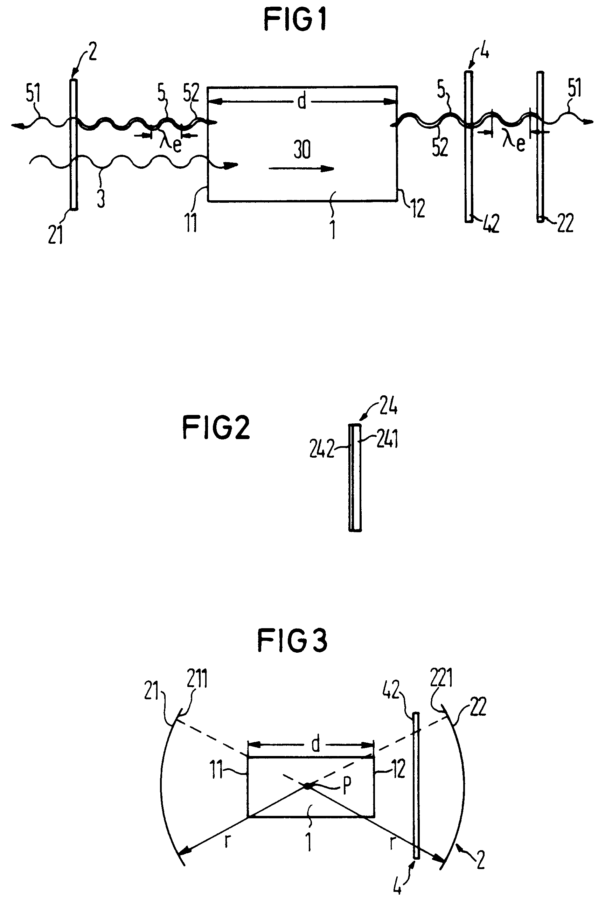

Der in Figur 1 dargestellte Laser besteht aus dem im optischen Resonator 2 angeordneten Kristall 1 der Länge d. Der optische Resonator 2 weist die Reflektoren 21 und 22 mit einem bestimmten Reflexionsvermögen und einem bestimmten Transmissionsvermögen für die vom Kristall 1 emittierte optische Strahlung 5 auf.

Der Reflektor 21 ist gegenüber der Endfläche 11 des Kristalls 1 im Strahlengang des von dieser Endfläche 11 abgestrahlten Anteils der optischen Strahlung 5 angeordnet. Ähnlich ist der Reflektor 22 gegenüber der von der Endfläche 11 abgekehrten anderen Endfläche 12 des Kristalls 1 im Strahlengang des von dieser anderen Endfläche 12 abgestrahlten Anteils der optischen Strahlung 5 angeordnet.

Das Anregungslicht 3 zur Erzeugung der optischen Strahlung 5 wird in den Kristall 1 in dessen Längsrichtung eingestrahlt, beispielsweise durch die Endfläche 11, und breitet sich im Kristall 1 in der mit der Längsrichtung zusammenfallenden Ausbreitungsrichtung 30 aus.

Der optische Resonator 2 und die wellenlängenselektive Einrichtung 4 sind zumindest auf einer Seite des Kristalls 1 für das Anregungslicht 3 durchlässig. Dies bedeutet, daß im Beispiel nach Figur 1 zumindest der Reflektor 21 für das Anregungslicht 3 durchlässig ist. Vorteilhafterweise ist in diesem Fall der andere Reflektor 22 für das Anregungslicht 3 undurchlässig. Die wellenlängenselektive Einrichtung 4 weist vorteilhafterweise ein zwischen der anderen Endfläche 12 des Kristalls 1 und dem Reflektor 22 im Strahlengang der optischen Strahlung 5 angeordnetes wellenlängenselektives Filter 42 auf.

Das Anregungslicht 3, für welches der Reflektor 21 und das wellenlängenselektive Filter durchlässig sind, wird in Längsrichtung des Kristalls 1, durch die Endfläche 11 in der Ausbreitungsrichtung 30 und/oder durch die Endfläche 12 entgegengesetzt zur Richtung 30 in den Kristall 1 eingestrahlt, breitet sich im Kristall 1 in dessen Längsrichtung aus und bewirkt durch Absorption im Kristall 1 eine simulierte Emission von Laserstrahlung. Alternativ oder zusätzlich könnte das Anregungslicht 3 auch durch die Endfläche 12 in den Kristall 1 eingekoppelt werden, wobei dann der Reflektor 22 und das Filter 42 für das Licht 3 durchlässig sein mußten. Im alternativen Fall wäre es dann vorteilhaft, wenn das Filter 42 zwischen der Endlfäche 11 des Kristalls 1 und dem Reflektor 21 angeordnet und der Reflektor 21 für das Anregungslicht 3 undurchlässig wäre.

Das Kristallmaterial ist so gewählt, daß mit dem im optischen Resonator 2 angeordneten Kristall 1 allein und ohne die wellenlängenselektive Filtereinrichtung 4 durch die Absorption des Anregungslichts 3 wenigstens eine Emissionslinie mit einer bestimmten Wellenlänge λₐ angeregt wird, die gegenüber anderen in diesem Material und mit diesem Anregungslicht zwei möglichen und bei anderen Wellenlängen liegenden Emissionslinien dadurch ausgezeichnet ist, daß der Laser bei dieser ausgezeichneten Emissionslinie mit geringsten Verlusten und höchster Verstärkung emittiert.

Die in dem optischen Resonator 2 eingebrachte wellenlängenselekive Filtereinrichtung 4 ist dagegen auf eine Emissionslinie mit einer ausgewählten, gegenüber der bestimmten Wellenlänge λₐ der ausgezeichneten Emissionslinie verschiedenen Wellenlänge λₑ derart abgestimmt, daß die Filtereinrichtung 4 für diese ausgewählte Wellenlänge λₑ ein höheres Durchlässigkeitsmögen als für die Wellenlängen aller übrigen Emissionslinien einschließlich der ausgezeichneten Emissionslinie aufweist. Diese bewirkt, daß die für die ausgezeichente Emissionslinie geltenden günstigen Verhältnisse sich zugunsten der Emissionslinie mit der ausgewählten Wellenlänge λₑ verschieben.

Es hat sich jedoch gezeigt, daß dies allein noch nicht ausreicht, um diese Emissionslinie mit der ausgewählten Wellenlänge ₑ anzuregen, sondern daß es wesentlich darauf ankommt, die Länge d des Kristalls 1 in Ausbreitungsrichtung des Anregungslichts 3, d.h. in Richtung 30 oder entgegengesetzt, einerseits so groß zu bemessen ist, daß das Anregungslicht 3 beim Durchlaufen des Kristalls 1 eine ausreichende Absorption für die Anregung der Emissionslinie mit der ausgewählten Wellenlänge λₑ erfährt und andererseits so klein zu bemessen ist, daß die mit der ausgewählten Wellenlänge λₑ emittierte Laserstrahlung 5 beim Durchlaufen des Kristalls 1 eine so geringe Reabsorption erfährt, daß diese Laserstrahlung 5 im Resonator anschwingen kann. Der Kristall 1 muß daher eine Mindestlänge haben, die nicht unterschritten werden darf und eine Maximallänge, die nicht überschritten werden darf.

Die Leistung der aus dem Kristall 1 vermöge der wellenlängenselektiven Einrichtung 4 und der richtig bemessenen Länge des Kristalls 1 durch die Endfläche 11 und/oder 12 austretenden Laserstrahlung 5 mit der ausgewählten Wellenlänge λₑ wird zum einen Teil an den Reflektoren 21 und 22 zurück in den Kristall 1 - in der Figur 1 durch die reflektierende Laserstrahlung 52 angedeutet - reflektiert, zum anderen Teil durch die Reflektoren 21 und 22 als Nutzstrahlung - in der Figur 1 durch die transmittierte Laserstrahlung 51 angedeutet - transmittiert.

Ein Reflektor 21 und/oder 22 kann beispielsweise durch einen gewöhnlichen teildurchlässigen Spiegel mit einem bestimmten Transmissions- und Reflexionsvermögen realisiert sein. Das wellenlängenselektive Filter 42 kann beispielsweise durch ein doppelbrechendes Filter, beispielsweise ein doppelbrechendes Prisma, realisiert sein.

Auch kann als Reflektor 21 und/oder 22 vorteilhaft ein wellenlängenselektiv teildurchlässiger Spiegel verwendet werden, der auf die ausgewählte Wellenlänge λₑ abgestimmt und dadurch sowohl die Funktion eines Reflektors als auch die Funktion eines wellenlängenselektiven Filters erfüllen.

Ein bekanntes Beispiel für einen solchen wellenlängenselektiven teildurchlässigen Spiegel ist in der Figur 2 angedeutet, bei dem auf einem für die ausgewählte Wellenlänge λₑ durchlässigen Trägerkörper 241 beispielsweise eine dielektrische Vielfachschicht 242 aufgebracht ist, die zusammen mit dem Trägerkörper 241 einen wellenlängenselektiv teildurchlässigen Spiegel in Form eines Interferenzfilters bildet. Doch gibt es auch andere bekannte Realisierungsmöglichkeiten für einen derartigen wellenlängenselektiv teildurchlässigen Spiegel.

Bei dem Ausführungsbeispiel nach Figur 3 ist der Kristall 1 zwischen zwei Reflektoren 21 und 22 aus mit ihren konkaven Seiten 211 und 221 zugekehrten Hohlspiegeln angeordnet, deren Krümmungsradius r beispielsweise gleich ist und deren Krümmungsmittelpunkte beispielsweise in einem gemeinsamen Punkt P zusammenfallen. Auch diese Hohlspiegel 221 und 222 können als wellenlängenselektiv teildurchlässige Spiegel, beispielsweise in Form des Spiegels 24 nach Figur 2 ausgebildet sein, wodurch der Gesamtaufbau sehr vereinfacht wird, weil gesonderte wellenlängenselektive Filter fortfallen können. Bei dem Beispiel nach Figur 3 ist von dieser Möglichkeit nicht Gebrauch gemacht. Dort ist eine gesonderte wellenlängenselektive Einrichtung 4 mit dem wellenlängenselektiven Filter 42 vorhanden. Der Kristall 1 ist beispielsweise so angeordnet, daß sein Zentrum mit dem Punkt P zusammenfällt.

Konkretes Ausführungsbeispiel des Lasers nach Figur 3: Der Kristall besteht aus Er:YAG mit einer Länge d zwischen 0,5 mm und 10 mm, beispielsweise einer Länge d von 4,15 mm. Beim verwendeten Kristallmaterial ErYAG sind 0,1% bis 5%, beispielsweise 0,5% der vom Yttrium eingenommenen Kristallgitterplätze mit Erbium anstelle von Yttrium besetzt. Die Reflektoren 21 und 22 in Form der Hohlspiegel haben einen Radius r von beispielsweise 10 cm und sind so ausgebildet, daß sie 95% bis 99% der aus dem Kristall 1 austretenden Laserstrahlungsleistung zurück in den Kristall 1 reflektieren und 1% bis 5% dieser Leistung transmittieren.

Dieser bisher beschriebene Laser läuft bei den Wellenlängen mit den geringsten Verlusten und der höchsten Verstärkung. Dies sind die bestimmten Wellenlängen λₐ = 1,646 µm und λₐ = 1,659 µm.

Durch die wellenlängenselektive Einrichtung 4 im Resonator 2 können diese bestimmten Wellenlängen λₐ = 1,646 µm und λₐ = 1,659 µm unterdrückt werden, womit mit der Wahl der richtigen Kristallänge d die Möglichkeit gegeben ist, Emissionslinien mit ausgewählten Wellenlängen λₑ anzustimmen.

Mit einer wellenlängenselektiven Einrichtung 4 mit denmwellenlängenselektiven Filter 42 in Form eines doppelbrechenden Filters konnten bei diesem Ausführungsbeispiel des Lasers nach Figur 3 neben den ausgezeichneten Emissionslinien mit den bestimmten Wellenlängen λₐ = 1,646 µm und λₐ = 1,659 µm weitere sieben Emissionslinien bei verschiedenen ausgewählten Wellenlängen λₑ < 1,640 µm angestimmt werden, wobei die wellängenselektive Einrichtung jeweils auf eine dieser verschiedenen ausgewählten Wellenlängen λₑ abgestimmt wurde. Für jede dieser sieben weiteren Emissionslinien wurde der Resonator 2 auf maximale Ausgangsleistung justiert und eine Input-Output-Messung durchgeführt, mit der sich die Schwelleistung Pₛ, die der Strahlungsleistung der Laserstrahlung 51 in Figur 1 entsprechende Ausgangsleistung Pₒᵤₜ und der differentielle Wirkungsgrad η ermitteln ließ. Das Ergebnis ist in der folgenden Tabelle für die sieben ausgewählten Wellenlängen λₑ = 1,534 µm und λₑ = 1,634 µm sowie für die bestimmten Wellenlängen λₐ = 1,646 µm und λₐ = 1,659 µm in der folgenden Tabelle zusammengestellt:

| λₑ[µm]: | 1,534 | 1,549 | 1,564 | 1,575 | 1,587 | 1,619 | 1,634 | λₐ[µm] | 1,646 | 1,659 |
|---|---|---|---|---|---|---|---|---|---|---|
| *P*ₛ [mW] | 254 | 385 | 218 | 223 | 139 | 79 | 143 | | 112 | 106 |
| *P*ₒᵤₜ[mW] | 0.11 | 0.21 | 0.77 | 1.54 | 2.5 | 18.0 | 10.6 | | 20.5 | 6.5 |
| η[%] | 0.06 | 0.14 | 0.39 | 0.63 | 1.1 | 4.7 | 2.4 | | 4.1 | 2.3 |

Aus dieser Tabelle ist zu entnehmen, daß mit diesem Laser fünf Emissionslinien mit ausgewählten Wellenlängen λₑ zwischen 1,534 µm und 1,587 µm anregbar sind, die genau in das Dämpfungsminimum der heute üblichen Glasfaser-Lichtwellenleiter fallen. Dieser Laser kann vorteilhafterweise durch das Anregungslicht 3 aus einer Laserdiode angeregt werden, so daß durch diesen Laser ein für die kohärent optische Informationsübertragung in Glasfasern hervorragend geeigneter diodengepumpter Festkörperlaser geschaffen ist.

## Patentansprüche

1. Festkörperlaser zum Erzeugen optischer Strahlung, insbesondere für die optische Informationsübertragung, mit einem in einem optischen Resonator (2) angeordneten Kristall (1) aus einem Material, in welchem durch Absorption von Anregungslicht (3) zumindest eine Emissionslinie mit einer bestimmten Wellenlänge ( λₐ ) anregbar ist, die gegenüber anderen in diesem Material und mit diesem Anregungslicht (3) möglichen und bei anderen Wellenlängen liegenden Emissionslinien dadurch ausgezeichnet ist, daß der Laser bei dieser ausgezeichneten Emissionslinie mit geringsten Verlusten und höchster Verstärkung emittiert,
**dadurch gekennzeichnet,**
daß im Resonator (2) eine wellenlängenselektive Einrichtung (4) angeordnet ist, die auf eine Emissionslinie mit einer ausgewählten, gegenüber der bestimmten Wellenlänge (λₐ) der ausgezeichneten Emissionslinie verschiedenen Wellenlänge (λₑ) derart abgestimmt ist, daß die Filtereinrichtung (4) für diese ausgewählte Wellenlänge (λₑ) ein höheres Durchlässigkeitsvermögen als für die Wellenlängen aller übrigen möglichen Emissionslinien einschließlich der ausgezeichneten Emissionslinie aufweist, und
daß eine Länge (d) des Kristalls (1) in Ausbreitungsrichtung (30) des Anregungslichts (3) im Kristall (1) einerseits so groß bemessen ist, daß das Anregungslicht (3) beim Durchlaufen des Kristalls (1) eine ausreichende Absorption für die Anregung der Emissionslinie mit der ausgewählten Wellenlänge (λₑ) erfährt, und andererseits so klein bemessen ist, daß die mit der ausgewählten Wellenlänge (λₑ) emittierte Laserstrahlung (5) beim Durchlaufen des Kristalls (1) eine so geringe Reabsorption erfährt, daß diese Laserstrahlung (5) im Resonator (2) anschwingen kann.

2. Laser nach Anspruch 1, **dadurch gekennzeichnet,** daß der Kristall (1) aus Er:YAG besteht.

3. Laser nach Anspruch 1, **dadurch gekennzeichnet,** daß der Kristall (1) aus Er:YAlO₃ besteht.

4. Laser nach Anspruch 2, **dadurch gekennzeichnet,** daß die Länge (d) des Kristalls (1) aus Er:YAG 0,5 mm bis 10 mm beträgt.

5. Laser nach Anspruch 2 oder 4, **dadurch gekennzeichnet,** daß im Kristall (1) aus Er:YAG 0,1 bis 5% der vom Yttrium eingenommenen Kristallgitterplätze mit Erbium anstelle von Yttrium besetzt sind.

6. Laser nach Anspruch 2, 4 oder 5, **dadurch gekennzeichnet,** daß die wellenlängenselektive Einrichtung (4) auf eine Emissionslinie mit einer ausgewählten Wellenlänge (λₑ⁾ kleiner als 1,640 µm abgestimmt ist.

7. Laser nach einem der vorhergehenden Ansprüche, **dadurch gekennzeichnet,** daß die wellenlängenselektive Einrichtung (4) ein doppelbrechendes Filter (42) aufweist.

8. Laser nach einem der vorhergehenden Ansprüche, **dadurch gekennzeichnet,** daß der optische Resonator (2) so ausgebildet ist, daß er 95% bis 99% der aus dem Kristall (1) austretenden Laserstrahlungsleistung zurück in den Kristall (1) reflektiert und 1% bis 5% dieser Leistung transmittiert.

9. Laser nach einem der vorhergehenden Ansprüche, **dadurch gekennzeichnet,** daß der optische Resonator (2) einen wellenlängenselektiv teildurchlässigen Spiegel (24) aufweist.

10. Laser nach einem der vorhergehenden Ansprüche, **dadurch gekennzeichnet,** daß der optische Resonator (2) zwei mit ihrer konkaven Seite (211, 221) einander zugekehrte Hohlspiegel (21, 22) zwischen denen der Kristall (1) angeordnet ist.

11. Anwendung eines Lasers nach einem der vorhergehenden Ansprüche zur Erzeugung optischer Strahlung (5) mit einer Wellenlänge kleiner als 1,64 µm zur optischen Informationsübertragung in Glasfasern.
